# EUROPEAN PATENT SPECIFICATION

(11) **EP 1 274 553 B1**
(45) Date of publication and mention of the grant of the patent: **05.12.2007**
(21) Application number: 01922391.6
(22) Date of filing: 15.03.2001
(51) Int. Cl.: B29C 45/02, B29C 45/54, B29C 45/57, B29C 45/53

(54) **DUAL-CYLINDER INJECTION MOLDING APPARATUS**
SPRITZGIESSMASCHINE MIT ZWEI ZYLINDERN
APPAREIL DE MOULAGE PAR INJECTION A DEUX CYLINDRES

(30) Priority: 15.03.2000 US 189690 P
(43) Date of publication of application: 15.01.2003
(73) Proprietor: DRAY, Robert F., Dallas, TX 75230 (US)
(72) Inventor: DRAY, Robert F., Dallas, TX 75230 (US)
(74) Representative: Regan-Addis, Heather
(86) International application number: PCT/US2001/008211
(87) International publication number: WO 2001/068344

(56) References cited:
- DE-A- 4 331 207
- DE-C- 19 632 315
- US-A- 4 067 673
- US-A- 4 315 726
- US-A- 4 722 679
- US-A- 5 123 833
- US-A- 5 509 797
- US-A- 5 773 042
- US-A- 5 968 429
- US-A- 6 017 210
- PATENT ABSTRACTS OF JAPAN vol. 009, no. 275 (M-426), 2 November 1985 (1985-11-02) -& JP 60 120024 A (KIYOSHI TAKAHASHI), 27 June 1985 (1985-06-27)

## Description

### TECHNICAL FIELD

The present invention relates to improvements in injection molding apparatus. More particularly, the present invention relates to an injection molding apparatus that employs a flighted screw turning and reciprocating in a containment barrel to plasticize polymer for injection and a separate piston and cylinder arrangement to inject the polymer into the mold.

### BACKGROUND ART

Injection molding-the process of injecting a quantity, or shot, of molten plastic or resin into a mold-is today one of the world's dominant forms of plastic article manufacture. In this process, resin is melted, mixed, and made flowable by a combination of the application of heat and kinetic energy, usually through the use of a flighted screw that rotates and reciprocates within a heated containment barrel. A mold is designed and manufactured with a cavity configuration that allows for the specific part or parts to be molded. The mold is mounted in a mold clamp and is in fluid communication with the containment barrel.

After the rotating screw and applied heat have plasticized the resin, the screw is moved forward to inject the shot of plastic from the accumulation volume into the mold. The operation known as pack-and-hold (exerting additional pressure on the resin in the mold) is accomplished by further forward movement of the screw.

Before the advent of the heated screw, the plastic or polymer simply was contained in a cylinder, which was heated by conduction. When the polymer was melted it was conveyed into an injection cylinder where a piston moved forward to inject the plastic into the mold. The piston performs the pack-and-hold operation.

The plasticizing action of the screw dramatically increased the speed of the process. Nevertheless, use of the rotating and reciprocating screw imposes several limitations on the process. First, a non-return valve is include as shown in US 4,067,673 on the end of the screw to permit plastic to flow past the screw during plasticizing but not during injection. Accurate shot size is a function of the accuracy of the non-return valve. Also, the size of the shot is determined by the inner diameter of the barrel and the stroke length of the screw; thus, the rate of recovery (backward movement of the screw to pre-injection position and filling of the accumulation volume downstream of the screw) is a function of the shot size. Screw diameter should be determined only by the recovery requirements and the cylinder diameter by the force required to fill the mold. Shot size thus is a screw and barrel length design feature, and variation in the shot size without corresponding change of screw and barrel length can cause reductions in efficiency of the plasticizing process. Sometimes shut-off valves are used to halt flow between barrel and mold, and are required if the screw is to recover when the mold is open.

There are also known injection moulding apparatus that employ the screw/heated barrel arrangement (without the ability to reciprocate) to fill an accumulator, which in turn provides pressure to inject shots into the mould. The accumulator also performs the pack-and-hold functions. Nevertheless, the screw must provide constant temperature and pressure to the accumulator or shot density and weight will vary. Furthermore, due to the relatively large volume of the accumulator and associated tubing and valving that are unswept by a piston, colour changes are problematic, requiring lengthy purging operations and increasing the likelihood of scrap parts. The three-way valve required for this type of machine directs the flow from the screw to the accumulator and from the accumulator to the mould has been a common source of problems. If the valve fails to operate properly, high injection pressures can be directed to and exerted upon the screw, destroying the thrust assembly of the screw. Short (small volume) shots and leakage are also common problems.

DE 19632315 discloses a moulding apparatus for relatively small "micro parts" that employs multiple pistons-and-cylinder arrangements to inject plastic into multiple mould cavities. A conventional flighted screw is provided to plasticize the resin. US 4067673 discloses an apparatus for the manufacture by foam moulding of plastic products.

A need exists, therefore, for an injection moulding apparatus that avoids the drawbacks of both reciprocating screw and accumulator systems, while providing the advantages and benefits of both.

### DISCLOSURE OF THE INVENTION

It is a general object of the present invention to provide an injection molding apparatus of the variety having separate plasticizing and injection units. This and other objects of the present invention are achieved with an injection cylinder in fluid communication with a mold, wherein movement of a piston within the cylinder injects a selected quantity of resin into the mold; a plasticizing unit including a flighted screw rotating in a heated containment barrel for plasticizing resin, the plasticizing unit in fluid communication with the injection cylinder for supplying the injection cylinder with plasticized resin, and a valving means for selectively placing the injection cylinder in fluid communication with the mold and placing the plasticizing unit in fluid communication with the injection cylinder, characterised in that the valving means is actuated by relative movement between the mold and one of the injection cylinder and the plasticizing unit. The valving means is also capable of exerting pressure on resin in the mold independently of the injection cylinder or plasticizing unit.

The valving means may comprise a nozzle extending from either the plasticizing unit or the injection cylinder. The nozzle is received in a bore in a portion of the mold and reciprocates or moves within the bore to accomplish the valving function and to exert pressure on the resin in the mold independently of the plasticizing unit or the injection cylinder.

### BRIEF DESCRIPTION OF THE DRAWINGS

Figure 1 is a partial section view of one embodiment of the present invention in a "no-flow" or pack-and-hold position.
Figure 2 is a partial section view of the embodiment of Figure 1 in a flowing or injection position.
Figures 3, 4, and 5 are partial section views of another embodiment of the present invention.
Figures 6 and 7 are partial section views of another embodiment of the present invention.

### MODES FOR CARRYING OUT THE INVENTION

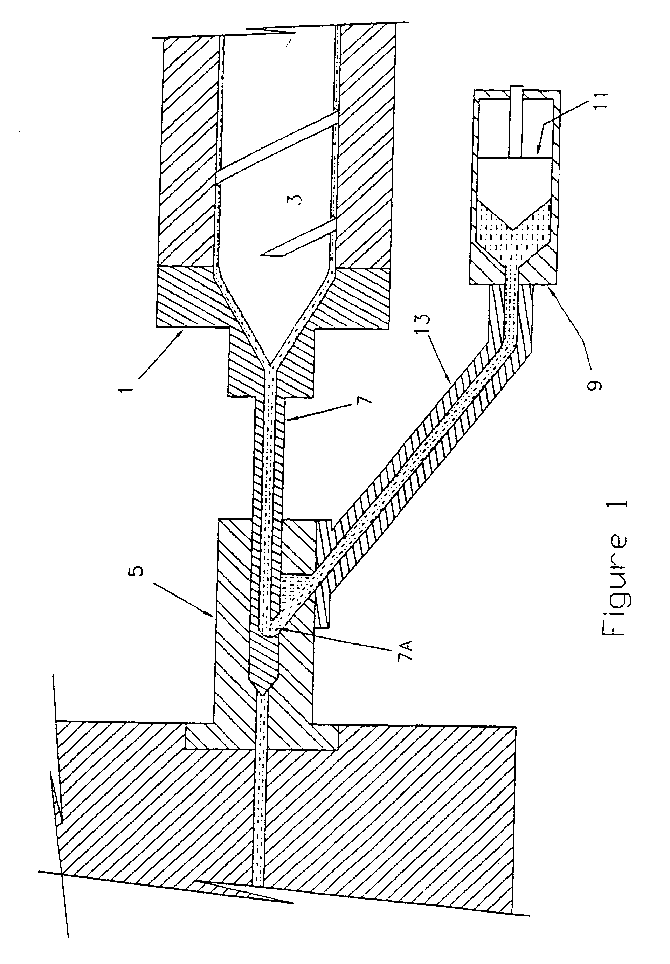

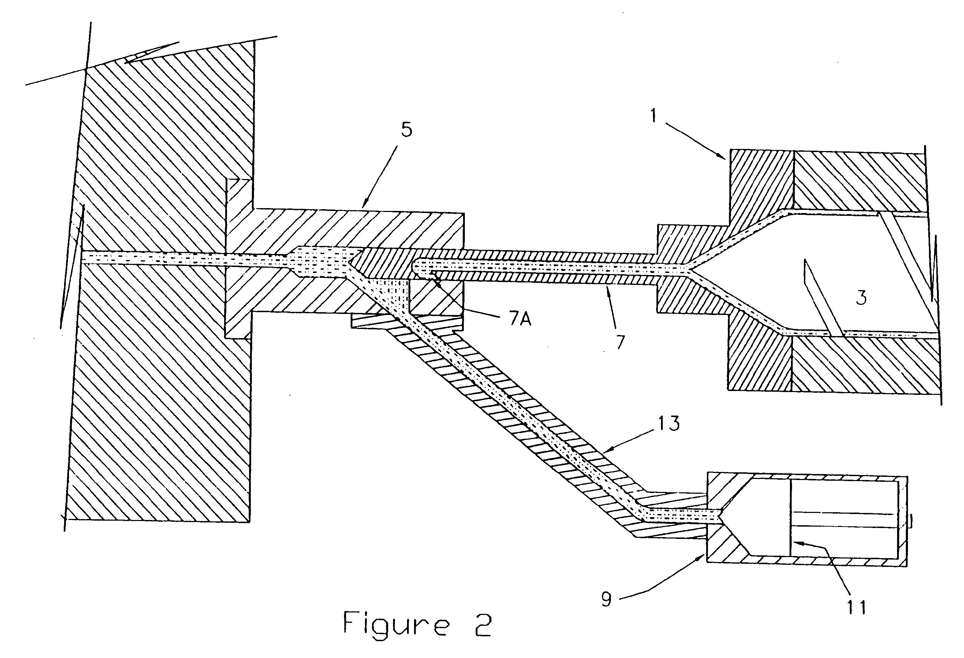

Turning now to the figures, and particularly to Figures 1 and 2, one embodiment of the invention according to the present invention is shown. An injection unit 1 is conventional in configuration and includes a flighted screw 3 turning in a heated containment barrel to melt and plasticize resin for injection. According to the present invention, plasticizing screw 3 is fixed and does not reciprocate and no accumulation volume is defined in the barrel.

A nozzle 7 extends from injection unit 1 into a bore in a sprue bushing 5 portion of a mold assembly. A central passage in nozzle 7 selectively is in fluid communication with an injection cylinder 9, which contains a reciprocating piston 11. A tube or pipe 13 connects an aperture in sprue bushing 5 that can be aligned with a port 7A in nozzle 7.

Figure 1 depicts the apparatus in a pack-and-hold position in which the tip of nozzle 7 is deep in the bore in sprue bushing 5 and increased pressure is exerted on the resin in the mold by the nozzle. In this position, fluid communication between injection cylinder 9 and the mold is blocked, but screw 3 can turn and fill cylinder 9 with resin for another shot.

Figure 2 depicts the apparatus of Figure 1 in an inject position in which nozzle 7 is retracted, permitting fluid communication between cylinder 9 and the mold through the passage in tube 13 and sprue bushing 5, and thus injection of resin. Relative movement between injection unit 9 and sprue bushing 5 is induced by the electro-mechanical or hydraulic sled arrangement conventionally provided with injection unit and mold assemblies. This sled arrangement can be easily adapted to control injection and pack-and-hold operations through the use of limit switches and the like. Thus, the nozzle functions as a valve to selectively establish fluid communication between the injection cylinder and the mold (and between the injection cylinder and the plasticizing unit).

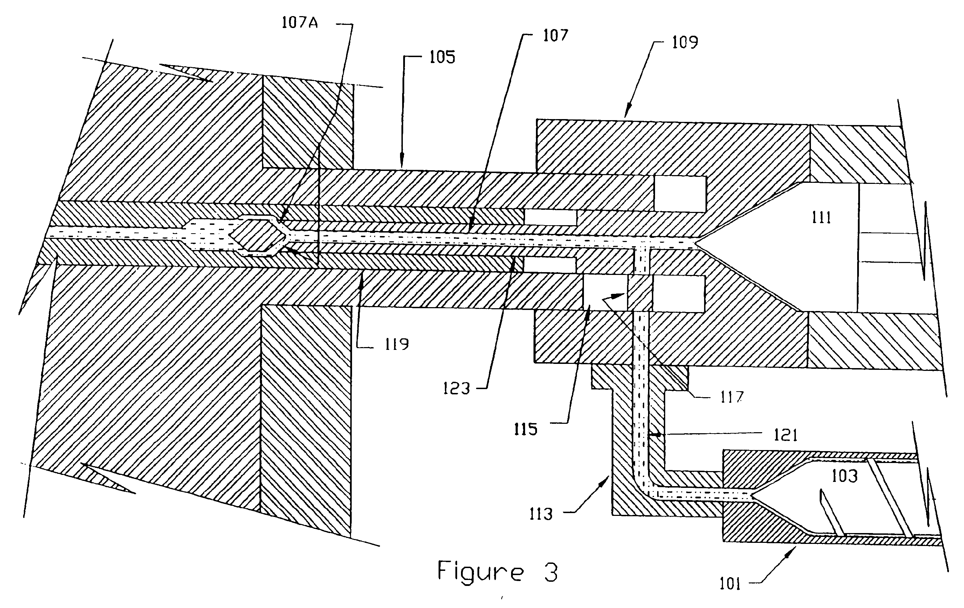

Figures 3-5 are partial section views of another embodiment of the present invention. In this embodiment, injection cylinder 109 is coaxially aligned with sprue bushing 105, while the plasticizing unit (barrel 101 and screw 103) is offset.. A nozzle 107 extends from cylinder 109 into a bore in sprue bushing 105 and a corresponding bore in a sprue bar 123 disposed concentrically within the bore of sprue bushing 105.

Sprue bar 123 is part of a multi-part mold (as opposed to conventional two-part) molds, and is not a necessary part of the invention except where the invention is used with multi-part molds. Where a multi-part mold is not used, nozzle 107 is received directly in a bore in sprue bushing 105.

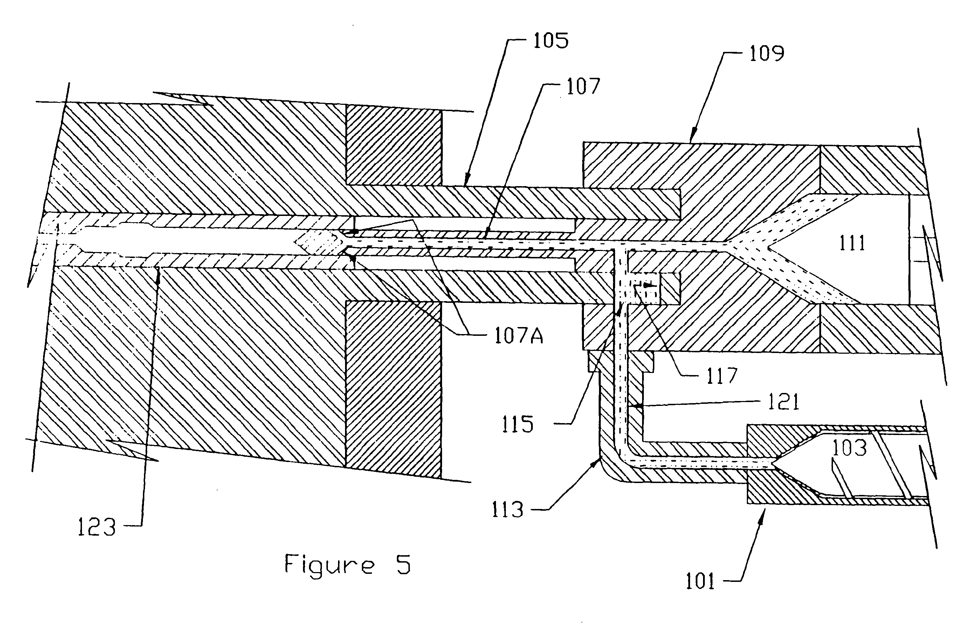

In this embodiment, plasticizing screw 103 and barrel 101 are in fluid communication with cylinder 109 through conduit 113 and corresponding passage 121. An annular recess 115 is dimensioned to receive a portion of sprue bushing 105 in sliding relation. An aperture 117 in the wall of sprue bushing 105 selectively obstructs the passag in fluid communication between screw and barrel and the outlet of injection cylinder 109. Relative movement between the cylinder and mold aligns passage 121 with aperture 117 so that cylinder 109 can be filled with plasticized resin from screw and barrel 101, 103. Relative movement also causes nozzle 107 to move within bore 119 into alignment with an enlarged-diameter portion of the bore that permits resin to flow through ports 107A and into the mold during the injection step (illustrated in Figure 5). Obstruction of ports 107A is accomplished by moving them (and nozzle 107) forward of or behind the enlarged-diameter portion. The relative movement again is caused by the sled arrangement provided with most injection molding machines and the relative movement actuates the valving function.

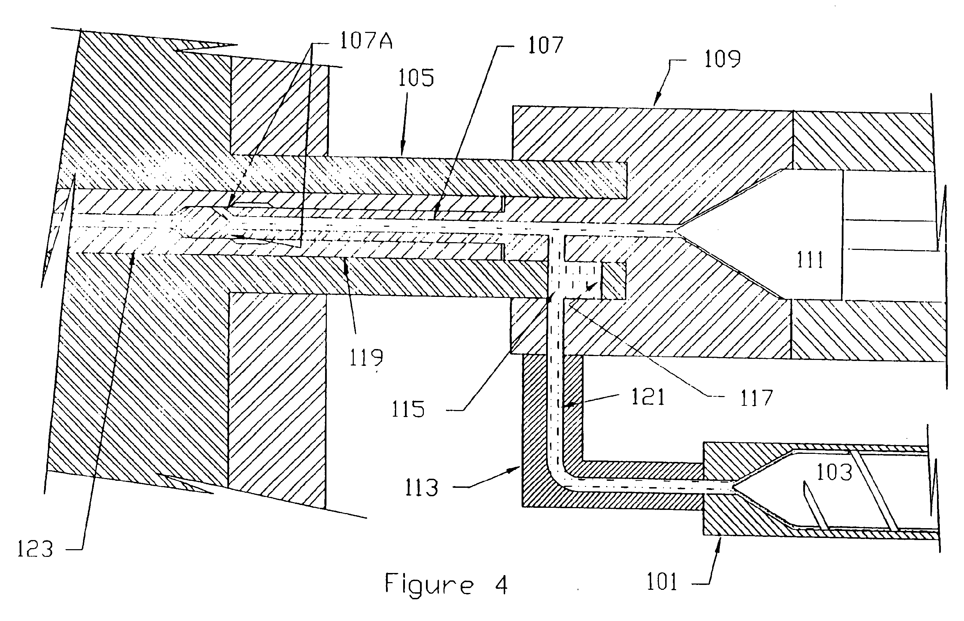

Figure 4 depicts the embodiment of Figure 3 in a pack-and-hold position in which the end of nozzle 107 extends forward beyond the enlarged-diameter portion of bore 119 and thereby exerts additional pressure on the resin in the mold independent of the injection cylinder, which is able to reverse direction and fill with plasticized resin from plasticizing cylinder and screw 101, 103 because of the alignment between aperture 117 and passage 121.

Figure 5 depicts the embodiment of Figures 3 and 4 in a decompression position in which the end of nozzle 107 and ports 107A are retracted beyond the enlarged-diameter portion of bore 119, permitting decompression of the mold. In this position, ports 107A are obstructed so that resin cannot flow into the mold.

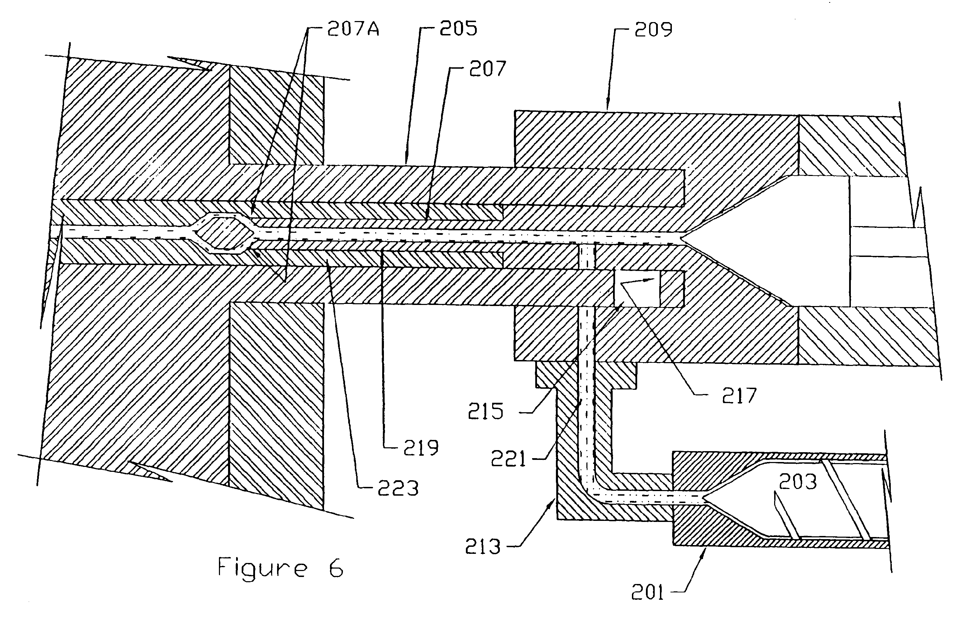

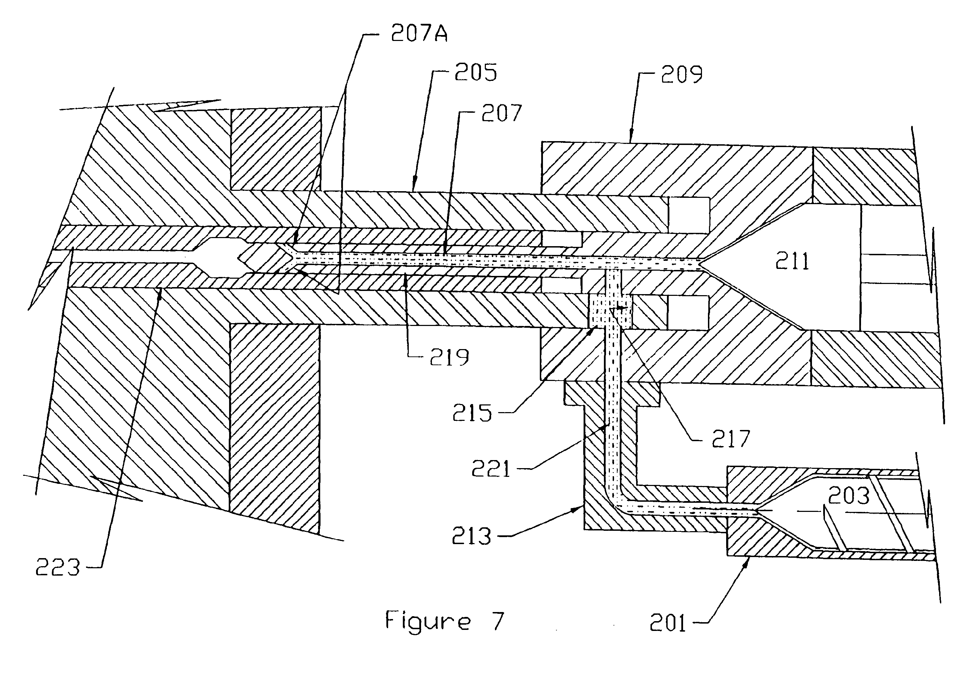

Figures 6 and 7 illustrate another embodiment of the present invention in which no space is provided forward of the enlarged-diameter portion of bore 219. In other words, the end of nozzle 107 and ports 107A cannot move past the enlarged-diameter portion of passage 119. This embodiment thus is not adapted to provide pack-and-hold operations, but only injection (Figure 6) and decompression and recovery (Figure 7) operations. The amount of relative movement between cylinder 109 and the mold is less than in the other embodiments and has application in high-speed processes. This embodiment also illustrates a sprue bar 223, which is not part of the invention, but a feature of a multi-part mold, as set forth above.

The present invention has a number of advantages. A principal advantage is that injection, pack-and-hold, and decompression operations are not dependent upon pressure exerted by the plasticizing screw or injection cylinder. All embodiments provide a separate piston to exert these pressures on resin in the mold. This permits the plasticizing screw to rotate and plasticize at all times, increasing melt uniformity and avoiding transients in temperatures and mixing that can cause irregularities and defects in the resulting molded products. Also, because the injection cylinder performs only the injection function, its design can be optimized and injection controlled more precisely. Pack-and-hold and decompression operations also can be controlled more precisely.

The injection cylinder pressure requirements are far less than in conventional arrangements (normally in the range of 1,38·10⁷ to 1,72·10⁷ Pa (2,000-2,500 psi)) because high pressures are required only during the final filling of the mold (pack). Mold fill occurs with the present invention at less than 6,89·10⁶ Pa (1,000 psi). Thus, the need for high-pressure (up to 2,07·10⁸ Pa (30,000 psi)) valve and barrel designs is eliminated because pack-and-hold is accomplished with a separate and smaller-diameter piston and cylinder arrangement.

The invention is described with reference to preferred embodiments thereof. It is thus not limited, but is susceptible to variation and modification without departing from the scope and spirit of the invention.

## Claims

1. An injection molding apparatus for injecting resin into a mold (5, 105, 205), the apparatus comprising:
an injection cylinder (9, 109, 209) in fluid communication with the mold, wherein movement of a piston (11, 111, 211) within the cylinder injects a selected quantity of resin into the mold;
a plasticizing unit (1, 101, 201) including a flighted screw (3, 103, 203) rotating a heated containment barrel for a plasticizing resin, the plasticizing unit in fluid communication with the injection cylinder for supplying the injection cylinder with plasticized resin; and
valving means (7, 107, 207) for selectively placing the injection cylinder in fluid communication with the mold, **characterised in that** the valving means is actuated by relative movement between the mold and one of the injection cylinder and the plasticizing unit.

2. The injection molding apparatus according to claim 1, wherein the valving means (7, 107, 207) selectively exerts pressure on the resin in the mold (5, 105, 205) independently of the plasticizing unit or the injection cylinder.

3. The injection molding apparatus according to claim 1 or claim 2, wherein the injection cylinder (109, 209) is aligned with the mold (105, 205).

4. The injection molding apparatus according to claim 1 or claim 2, wherein the plasticizing unit (1) is aligned with the mold (5).

5. The injection molding apparatus according to any one of the preceding claims, wherein the valving means comprises a nozzle (7, 107, 207) extending from one of the injection cylinder and the plasticizing unit, the nozzle being received in a bore formed in a portion of the mold (5, 105, 205) wherein the position of the nozzle within the bore selectively establishes fluid communication between the injection cylinder and the mold.

6. The injection molding apparatus according to any one of the preceding claims, wherein the valving means (7, 107, 207) also selectively places the plasticising unit (1, 101, 201) in fluid communication with the injection cylinder (9, 109, 209).

7. An injection molding apparatus according to claim 5, wherein the nozzle (7, 107, 207) is received for reciprocation in the bore formed in a portion of the mold (5, 105, 205), wherein relative movement between the nozzle and the bore selectively places the injection cylinder in fluid communication with the mold.

8. The injection molding apparatus according to claim 7, wherein the nozzle (7, 107, 207) selectively exerts pressure on the resin in the mold independently of the plasticizing unit or the injection cylinder.

## Patentansprüche

1. Spritzgießmaschine zum Injizieren von Harz in eine Form (5, 105, 205), welche Maschine aufweist:
einen Injektionszylinder (9, 109, 209) in Fluidverbindung mit der Form, wobei eine Bewegung eines Kolbens (11, 111, 211) innerhalb des Zylinders eine ausgewählte Menge Harz in die Form injiziert;
eine Plastifizierungseinheit (1, 101, 201) enthaltend eine Schneckenschraube (3, 103, 203), die sich in einem erwärmten Trommelbehälter zum Plastifizieren eines Harzes dreht, welche Plastifizierungseinheit in Fluidverbindung mit dem Injektionszylinder ist, um das plastifizierte Harz in den Injektionszylinder zu liefern; und
Ventilmittel (7" 107, 207) zum selektiven Einstellen des Injektionszylinders in Fluidverbindung mit der Form, **dadurch gekennzeichnet, dass** die Ventilmittel durch eine Relativbewegung zwischen der Form und entweder dem Injektionszylinder oder der Plastifizierungseinheit betätigt werden.

2. Spritzgießmaschine nach Anspruch 1, bei der die Ventilmittel (7, 107, 207) selektiv einen Druck auf das Harz in der Form (5, 105, 205) unabhängig von der Plastifizierungseinheit oder dem Injektionszylinder ausüben.

3. Spritzgießmaschine nach Anspruch 1 oder Anspruch 2, bei der der Injektionszylinder (109, 209) mit der Form (105, 205) ausgerichtet ist.

4. Spritzgießmaschine nach Anspruch 1 oder Anspruch 2, bei der die Plastifizierungseinheit (1) mit der Form (5) ausgerichtet ist.

5. Spritzgießmaschine nach einem der vorhergehenden Ansprüche, bei der die Ventilmittel eine Düse (7, 107, 207), die sich von dem Injektionszylinder oder der Plastifizierungseinheit erstreckt, aufweist, welche Düse in einer Bohrung aufgenommen ist, die in einem Bereich der Form (5, 105, 205) ausgebildet ist, in welchem die Position der Düse innerhalb der Bohrung selektiv eine Fluidverbindung zwischen dem Injektionszylinder und der Form herstellt.

6. Spritzgießmaschine nach einem der vorhergehenden Ansprüche, bei der die Ventilmittel (7, 107, 207) auch die Plastifizierungseinheit (1, 101, 201) in Fluidverbindung mit dem Injektionszylinder (9, 109, 209) selektiv einstellen.

7. Spritzgießmaschine nach Anspruch 5, bei der die Düse (7, 107, 207) für eine Hin- und Herbewegung in der in einem Bereich der Form (5, 105, 205) ausgebildeten Bohrung aufgenommen ist, wobei eine Relativbewegung zwischen der Düse und der Bohrung den Injektionszylinder selektiv in Fluidverbindung mit der Form einstellt.

8. Spritzgießmaschine nach Anspruch 7, bei der die Düse (7, 107, 207) selektiv einen Druck auf das Harz in der Form unabhängig von der Plastifizierungseinheit oder dem Injektionszylinder ausübt.

## Revendications

1. Appareil de moulage par injection destiné à injecter de la résine à l'intérieur d'un moule (5, 105, 205), l'appareil comprenant :
un cylindre d'injection (9, 109, 209) en communication fluidique avec le moule, dans lequel le déplacement d'un piston (11, 111, 211) à l'intérieur du cylindre injecte une quantité sélectionnée de résine à l'intérieur du moule ;
une unité de plastification (1, 101, 201) comportant une vis filetée (3, 103, 203) amenant en rotation un fût de confinement chauffé pour une résine de plastification, l'unité de plastification étant en communication fluidique avec le cylindre d'injection pour alimenter le cylindre d'injection en résine plastifiée ; et
des moyens formant soupape (7, 107, 207) destinés à placer le cylindre d'injection en communication fluidique avec le moule, **caractérisés en ce que** les moyens formant soupape sont actionnés par le déplacement relatif entre le moule et un parmi le cylindre d'injection et l'unité de plastification.

2. Appareil de moulage par injection selon la revendication 1, dans lequel les moyens formant soupape (7, 107, 207) exercent de manière sélective une pression sur la résine dans le moule (5, 105, 205) indépendamment de l'unité de plastification ou du cylindre d'injection.

3. Appareil de moulage par injection selon la revendication 1 ou la revendication 2, dans lequel le cylindre d'injection (109, 209) est aligné sur le moule (105, 205).

4. Appareil de moulage par injection selon la revendication 1 ou la revendication 2, dans lequel l'unité de plastification (1) est alignée sur le moule (5).

5. Appareil de moulage par injection selon l'une quelconque des revendications précédentes, dans lequel les moyens formant soupape comprennent une buse (7, 107, 207) s'étendant d'un parmi le cylindre d'injection et l'unité de plastification, la buse étant reçue dans un alésage formé dans une partie du moule (5, 105, 205) dans lequel la position de la buse à l'intérieur de l'alésage établit de manière sélective la communication fluidique entre le cylindre d'injection et le moule.

6. Appareil de moulage par injection selon l'une quelconque des revendications précédentes, dans lequel les moyens formant soupape (7, 107, 207) placent également de manière sélective l'unité de plastification (1, 101, 201) en communication fluidique avec le cylindre d'injection (9, 109, 209).

7. Appareil de moulage par injection selon la revendication 5, dans lequel la buse (7, 107, 207) est reçue afin d'être animée d'un mouvement de va-et-vient dans l'alésage formé dans une partie du moule (5, 105, 205), dans lequel un déplacement relatif entre la buse et l'alésage place de manière sélective le cylindre d'injection en communication fluidique avec le moule.

8. Appareil de moulage par injection selon la revendication 7, dans lequel la buse (7, 107, 207) exerce de manière sélective une pression sur la résine dans le moule indépendamment de l'unité de plastification ou du cylindre d'injection.
